# EUROPÄISCHE PATENTANMELDUNG

(11) **EP 0 827 875 A2**
(43) Veröffentlichungstag der Anmeldung: **11.03.1998**
(21) Anmeldenummer: 97113916.7
(22) Anmeldetag: 12.08.1997
(51) Int. Cl.: B60R 21/20

(54) **Lenkrad mit einem Gassack-Rückhaltesystem**

(30) Priorität: 22.08.1996 DE 29614586 U
(71) Anmelder: TRW Occupant Restraint Systems GmbH, 73551 Alfdorf (DE)
(72) Erfinder: Heilig, Alexander, 73550 Wissgoldingen (DE)
(74) Vertreter: Degwert, Hartmut, Dipl.-Phys.

(57) **Zusammenfassung**

Ein Lenkrad mit einem Gassack-Rückhaltesystem, das einen mit einem Gasgenerator (20) in Strömungsverbindung stehenden Gassack (45) enthält, ist dadurch gekennzeichnet, daß ein Montageelement des Gassack-Rückhaltesystems als Deformationselement (18; 40) ausgebildet ist, das energieabsorbierend verformbar ist.

## Beschreibung

Die Erfindung betrifft ein Lenkrad mit einem Gassack-Rückhaltesystem, das einen Gasgenerator und einen mit diesem in Strömungsverbindung stehenden Gassack enthält.

Der an dem Lenkrad montierte Gassack kann im Bedarfsfall mit von dem Gasgenerator bereitgestelltem Druckgas entfaltet werden, um eine Schutzwirkung für den Fahrer des Fahrzeugs bereitzustellen. Kommt es beispielsweise zu einem Frontalaufprall des Fahrzeugs auf ein Hindernis, werden der Oberkörper und der Kopf des Fahrers von dem entfalteten Gassack aufgefangen. Dabei wird ein Großteil des in den Gassack eingefüllten Druckgases aus dem Gassack verdrängt. Falls es nach diesem sogenannten Primäraufprall zu einem Sekundäraufprall kommt, kann der Gassack keine optimale Schutzwirkung mehr bereitstellen.

Vom Gesetzgeber wird gefordert, daß die Verletzungsgefahr, die von einem Fahrzeuglenkrad für einen auf dieses aufprallenden Fahrzeuginsassen ausgeht, gering bleibt. Der Aufprall des Fahrzeuginsassen auf das Lenkrad wird mit dem sogenannten Kopfaufschlagtest simuliert, bei dem die auf einen Prüfkörper bei dessen Auftreffen auf das Lenkrad auftretenden Beschleunigungen bzw. Verzögerungen einen vorbestimmten Wen nicht überschreiten dürfen.

Die Erfindung schafft ein Lenkrad, von dem ein besonders geringes Verletzungsrisiko bei Unfallsituationen ausgeht, wie sie durch den Kopfaufschlagtest simuliert werden. Gemäß der Erfindung ist bei einem Lenkrad der eingangs genannten Art vorgesehen, daß ein Montageelement des Gassack-Rückhaltesystems als Deformationselement ausgebildet ist, das energieabsorbierend verformbar ist. Dieses Deformationselement vermindert durch Verformung und Energieaufnahme die beim Auftreffen auf das Lenkrad auftretenden Verzögerungen, wodurch das Verletzungsrisiko deutlich geringer wird. Da ein Montageelement des Gassack-Rückhaltesystems als Deformationselement verwendet wird, ergibt sich ein besonders geringer Bauaufwand. Ferner ergeben sich ein geringes Gewicht und geringe Kosten.

Gemäß einer bevorzugten Ausführungsform der Erfindung ist vorgesehen, daß das Montageelement ein Halteelement ist, das den eine Einblasöffnung des Gassacks umgebenden Wandungsteil des Gassacks festlegt. Bei dieser Gestaltung ergibt sich eine besonders einfache Bauweise.

Bei der Weiterbildung dieser bevorzugten Ausführungsform der Erfindung ist vorgesehen, daß das Halteelement nach Art eines Topfes ausgebildet ist, dessen Boden dem Außenraum des Lenkrades zugewandt ist und dessen zum Boden entgegengesetzter Rand den Wandungsteil des Gassacks festlegt. Bei dieser Gestaltung bildet der Boden des Halteelementes eine Prallfläche, die dem Fahrzeuginsassen zugewandt ist. Der Gassack kann um das topfförmige Halteelement herum zusammengelegt werden, so daß sich eine besonders geringe Bautiefe des Gassack-Rückhaltesystems ergibt.

Gemäß einer anderen bevorzugten Ausführungsform der Erfindung ist vorgesehen, daß das Montageelement ein Trägerelement ist, das den Gasgenerator an dem Lenkrad festlegt. Durch diese Gestaltung ergibt sich ebenfalls eine besonders einfache Bauweise.

Gemäß einer Weiterbildung diese bevorzugten Ausführungsform ist vorgesehen, daß das Trägerelement nach Art eines Topfes ausgebildet ist, dessen Boden mit einer Aufnahme für den Gasgenerator versehen ist und dessen zum Boden entgegengesetzter Rand mit der Lenkradnabe verbunden ist. Auf diese Weise ist der gesamte Gasgenerator an dem Deformationselement angebracht, so daß er beim Aufprall eines Fahrzeuginsassen nachgeben kann.

Weitere vorteilhafte Ausgestaltungen der Erfindung sind in den Unteransprüchen gegeben.

Die Erfindung wird nachfolgend unter Bezugnahme auf die beigefügte Zeichnung beschrieben. In dieser zeigen:
- Fig. 1 in einem schematischen Querschnitt ein erfindungsgemäßes Lenkrad gemäß einer ersten Ausführungsform;
- Fig. 2 in einem schematischen Querschnitt ein als Deformationselement ausgebildetes Montageelement für ein erfindungsgemäßes Lenkrad gemäß einer zweiten Ausführungsform;
- Fig. 3 das Montageelement von Figur 2 in einer Draufsicht; und
- Fig. 4 das Montageelement der Figuren 2 und 3 eingebaut in ein Gassack-Rückhaltesystem.

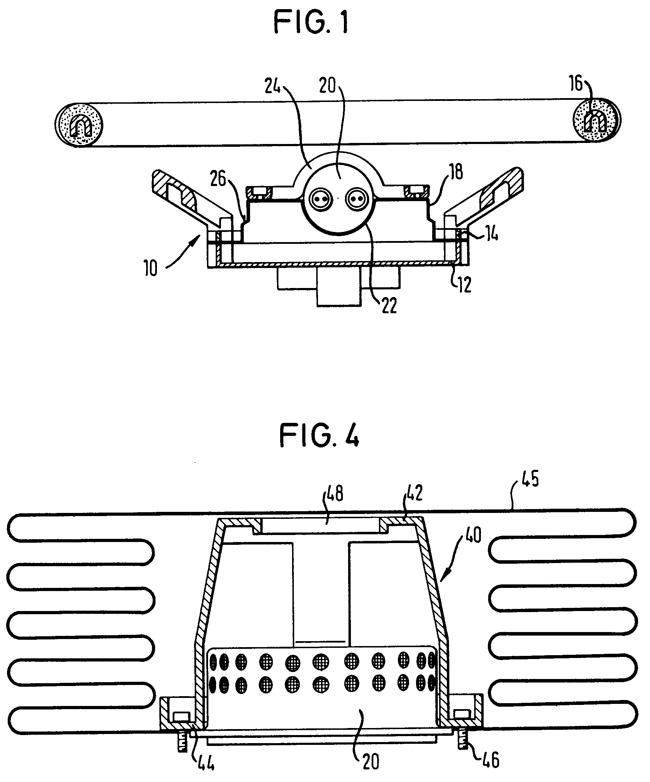

In Figur 1 ist schematisch ein erfindungsgemäßes Lenkrad 10 gemäß einer ersten Ausführungsform dargestellt. Dieses Lenkrad 10 besteht aus einer Lenkradnabe 12 und einem mit der Lenkradnabe verbundenen Lenkradoberteil 14, an das sich ein Lenkradkranz 16 anschließt. Zwischen der Lenkradnabe 12 und dem Lenkradoberteil 14 ist ein Montageelement 18 eingespannt, das als topfartiges Trägerelement für einen Gasgenerator 20 dient, der mit einem (nicht dargestellten) Gassack, der an dem Lenkrad 10 befestigt ist, in Strömungsverbindung steht. Der dem Fahrzeuginsassen zugewandte Boden des Trägerelementes 18 ist mit einer Aufnahme 22 versehen, in welcher der Gasgenerator 20 mittels einer Montageschelle 24 festgelegt ist. Das Trägerelement 18 ist mit einem in Umfangsrichtung verlaufenden Absatz 26 versehen.

Das Trägerelement 18 ist so dimensioniert, daß es bei einem Aufprall eines Fahrzeuginsassen auf das Lenkrad und insbesondere den Gasgenerator 20 nachgibt, so daß das Verletzungsrisiko für den Fahrzeuginsassen vermindert ist. Als Material für das Trägerelement 18 kann insbesondere Kunststoff verwendet werden.

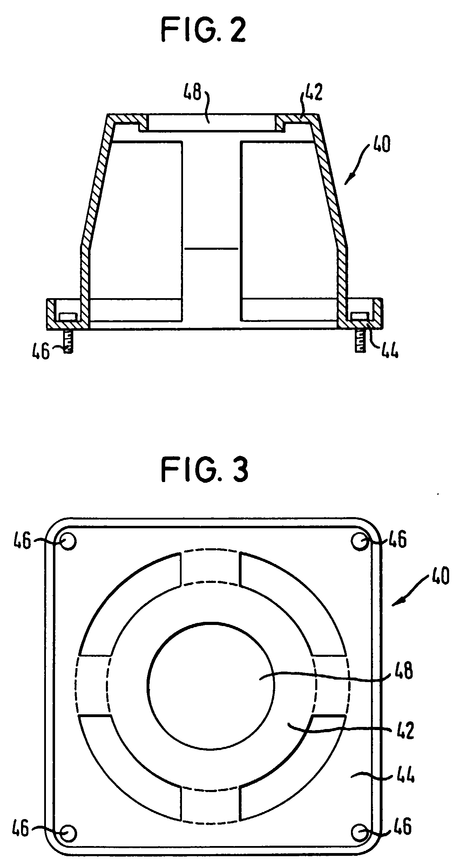

In den Figuren 2 und 3 ist ein als Deformationselement ausgebildetes Montageelement 40 dargestellt, das bei einer zweiten Ausführungsform eines erfindungsgemäßen Lenkrades als Halteelement für den eine Einblasöffnung des Gassacks umgebenden Wandungsteil des Gassacks dient. Dies ist in Figur 4 dargestellt. Das Halteelement 40 ist nach Art eines Topfes ausgebildet, dessen Boden 42 dem Fahrzeuginsassen zugewandt ist. Der zum Boden 42 entgegengesetzte Rand 44 des Halteelementes 40 dient zur Festlegung des die Einblasöffnung des Gassacks 45 umgebenden Wandungsteils des Gassacks an dem Lenkrad. Zu diesem Zweck können Schrauben 46 verwendet werden, die in die in diesen Figuren nicht dargestellte Lenkradnabe eingeschraubt werden. Wie in Figur 4 dargestellt ist, kann mit dem Rand 44 des Halteteils 40 auch der Gassack 20 an der Lenkradnabe festgespannt werden. Das Innere des Halteelementes 40 und das Innere des Gassacks 45 stehen über eine Öffnung 48 im Boden 42 des Halteelementes 40 in einer Strömungsverbindung. Zusätzlich können Durchbrüche in der Wand des Halteelementes 40 vorgesehen sein.

Der Boden 42 bildet eine Prallfläche für einen auf das Lenkrad auftreffenden Fahrzeuginsassen. Das Halteelement 40 ist so dimensioniert, daß es zu einer kontrollierten Verformung kommt, wodurch das Verletzungsrisiko für den Fahrzeuginsassen vermindert ist. Wie in Figur 4 dargestellt ist, kann der Gassack 45 um das Halteelement 40 herum zusammengelegt werden, so daß sich eine geringe Bautiefe des Gassack-Rückhaltesystems ergibt.

Wie gesehen wurde, beruht die Erfindung insbesondere darauf, ein ohnehin schon vorhandenes Montageelement des Gassack-Rückhaltesystems, also beispielsweise das Trägerelement für den Gasgenerator oder das Halteelement für den Gassack, so auszubilden, daß es gleichzeitig als Deformationselement wirkt. Auf diese Weise ergibt sich bei besonders geringem Aufwand eine deutliche Verringerung des Verletzungsrisikos für einen auf das Lenkrad auftreffenden Fahrzeuginsassen.

## Patentansprüche

1. Lenkrad mit einem Gassack-Rückhaltesystem, das einen mit einem Gasgenerator (20) in Strömungsverbindung stehenden Gassack (45) enthält, dadurch gekennzeichnet, daß ein Montageelement des Gassack-Rückhaltesystems als Deformationselement (18; 40) ausgebildet ist, das energieabsorbierend verformbar ist.

2. Lenkrad nach Anspruch 1, dadurch gekennzeichnet, daß das Montageelement ein Halteelement (40) ist, das den eine Einblasöffnung des Gassacks (45) umgebenden Wandungsteil des Gassacks festlegt.

3. Lenkrad nach Anspruch 2, dadurch gekennzeichnet, daß das Halteelement (40) nach Art eines Topfes aufgebildet ist, dessen Boden (42) dem Außenraum des Lenkrades zugewandt ist und dessen zum Boden entgegengesetzter Rand (44) den Wandungsteil des Gassacks (45) festlegt.

4. Lenkrad nach Anspruch 3, dadurch gekennzeichnet, daß der Boden (42) des topfartigen Halteelementes mit einer Öffnung (48) versehen ist.

5. Lenkrad nach Anspruch 4, dadurch gekennzeichnet, daß die Wand des topfartigen Halteelementes (40) mit Durchbrüchen versehen ist.

6. Lenkrad nach Anspruch 1, dadurch gekennzeichnet, daß das Montageelement ein Trägerelement (18) ist, das den Gasgenerator (20) an dem Lenkrad festlegt.

7. Lenkrad nach Anspruch 6, dadurch gekennzeichnet, daß das Trägerelement (18) nach Art eines Topfes ausgebildet ist, dessen Boden mit einer Aufnahme für den Gasgenerator (20) versehen ist und dessen zum Boden entgegengesetzter Rand mit der Lenkradnabe verbunden ist.

8. Lenkrad nach Anspruch 7, dadurch gekennzeichnet, daß das Trägerelement (18) mit einem in Umfangsrichtung verlaufenden Absatz (26) versehen ist.

9. Lenkrad nach einem der Ansprüche 7 und 8, dadurch gekennzeichnet, daß der Rand des Trägerelementes (18) als Haltering wirkt, der den eine Einblasöffnung des Gassacks umgebenden Wandungsteil des Gassacks festlegt.
